(19) Europäisches Patentamt
European Patent Office
Office européen des brevets

(11) EP 0 412 027 B1

(12) # FASCICULE DE BREVET EUROPEEN

(45) Date de publication et mention de la délivrance du brevet:
**28.01.1998 Bulletin 1998/05**

(51) Int Cl.6: **C09D 17/00**, D21H 19/58 // C08F230/02

(21) Numéro de dépôt: **90420357.7**

(22) Date de dépôt: **25.07.1990**

(54) **Utilisation dans les suspensions aqueuses pigmentaires de carbonate de calcium d'un agent polycarboxylique à fonction phosphatée ou phosphonée inhibant l'effet de choc provoqué par l'introduction d'un électrolyte sous forme concentrée**

Verwendung in den wässerigen Kalziumkarbonat-Pigmentdispersionen von einer Phosphat- oder Phosphonatgruppen haltigen Polycarbonsäureverbindung als Mittel zur Verhinderung des von der Zuführung eines konzentrierten Elektrolyts verursachten "Knock-Down"-Effekts

Use in the aqueous pigment dispersions of calcium carbonate of a polycarboxylic agent with phosphate or phosphonate groups inhibiting the knockdown effect caused by the introduction of an electrolyte in concentrated form

(84) Etats contractants désignés:
**AT BE DE ES GB IT**

(30) Priorité: **04.08.1989 FR 8910745**

(43) Date de publication de la demande:
**06.02.1991 Bulletin 1991/06**

(73) Titulaire: **COATEX S.A.**
**F-69300 Caluire (FR)**

(72) Inventeurs:
- **Ravet, Georges**
  **F-69290 Saint-Genis-Les-Ollières (FR)**
- **Mongoin, Jacques**
  **F-69410 Champagne-au-Mont d'Or (FR)**
- **Suau, Jean-Marc**
  **F-69009 Lyon (FR)**

(56) Documents cités:
**EP-A- 0 278 880** **EP-A- 0 305 850**
**EP-A- 0 366 569** **WO-A-88/02382**
**US-A- 3 684 779**

- **PATENT ABSTRACTS OF JAPAN, vol. 9, no. 145 (C-287)[1868], 20 juin 1985; & JP-A-60 28 818 (RAION) 14-02-1985**

EP 0 412 027 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

DOMAINE DE L'INVENTION

L'invention concerne l'application aux suspensions aqueuses de carbonate de calcium, à haute concentration et de dimension pigmentaire, d'un agent de compatibilité, de dispersion et/ou de broyage tel que défini à la revendication 1 qui est sélectionné dans la famille des copolymères de formule générale :

$$-(A)_K-(B)_L-(C)_M-$$

dans laquelle le monomère (A) est un monomère éthylénique à fonction monocarboxylique, (B) est un monomère éthylénique à fonction phosphatée ou phosphonée, et le monomère (C) est un monomère éthylénique à fonction dicarboxylique, ledit agent sélectionné ayant la propriété d'empêcher l'augmentation brutale et exagérée de la viscosité (effet de choc) lors de l'introduction dans lesdites suspensions d'un électrolyte sous une forme concentrée.

L'invention concerne aussi les suspensions aqueuses de carbonate de calcium pigmentaires contenant l'agent de compatibilité sélectionné.

L'invention concerne enfin l'application au domaine papetier et plus particulièrement au couchage des suspensions aqueuses pigmentaires précitées contenant l'agent de compatibilité sélectionné.

ARRIERE-PLAN DE L'INVENTION

Depuis longtemps, l'homme de l'Art utilise pour l'enduction du papier des suspensions pigmentaires se composant principalement, d'abord, de pigments minéraux tels que le kaolin, le carbonate de calcium, le talc, l'oxyde de titane, seuls ou en mélange; ensuite, d'une phase aqueuse dans laquelle ils sont dispersés; puis, d'au moins un agent liant qui peut être hydrodispersé ou hydrosoluble, d'origine naturelle (tel que l'amidon, la caséine, la carboxyméthylcellulose), et/ou synthétique (tel que les émulsions styrène-acrylate, copolymères vinyliques); et enfin d'un agent dispersant (tel que par exemple un polyphosphate ou un polymère carboxylique hydrosoluble).

La concentration en matière sèche de ces suspensions pigmentaires, en particulier de carbonate de calcium, est pendant longtemps restée proche de 70% en poids par rapport à la masse totale.

Pendant ce temps, les techniques d'enduction du papier ayant évolué et permettant des vitesses d'enduction augmentées, il s'est avéré intéressant pour l'usager de mettre en oeuvre des suspensions pigmentaires, en particulier de carbonate de calcium, à concentration plus forte que dans le passé, c'est-à-dire ayant actuellement une concentration en matière sèche supérieure à 70% en poids.

De telles suspensions plus riches en pigments minéraux devraient permettre une enduction plus rapide du papier et une diminution de l'énergie thermique nécessaire au séchage, à condition qu'elles disposent des caractéristiques rhéologiques les plus favorables à l'opération d'enduction, c'est-à-dire qu'elles soient dans un état de faible viscosité à haut gradient de vitesse pour réaliser une enduction beaucoup plus rapide, ou encore qu'elles aient à faible taux de cisaillement une viscosité faible pour les manipuler aisément, en particulier dans les opérations de tamisage précédant l'opération d'enduction.

La plupart des suspensions pigmentaires, et en particulier celles de carbonate de calcium, dès lors qu'elles sont destinées à l'enduction du papier, sont alcalinisées par introduction d'un hydroxyde alcalin pour porter leur pH à une valeur d'au moins 9, étant un fait connu que l'agent liant (le latex) introduit dans les suspensions leur procurera une stabilité d'autant meilleure que leur pH sera supérieur à 9.

Pour ne pas risquer un abaissement de la haute concentration en matière sèche actuellement pratiquée pour les suspensions pigmentaires destinées à l'enduction du papier, l'alcalinisation desdites suspensions s'effectue de plus en plus par l'introduction d'un hydroxyde alcalin sous une forme concentrée.

Or, dans de nombreux cas, l'introduction d'un hydroxyde concentré dans des suspensions de carbonate de calcium de dimension pigmentaire provoque une augmentation extrêmement rapide et importante de leur viscosité qui peut atteindre la prise en masse desdites suspensions.

Ce phénomène, connu sous l'expression "effet de choc", se produit en particulier au sein des suspensions de carbonate de calcium chaque fois que se trouvent réunies des conditions de haute concentration en matière sèche (au moins 70% en poids), de faible granulométrie des pigments (au moins environ 40% de particules inférieures à 1 µm) et d'introduction d'un électrolyte sous une forme concentrée.

L'absence de l'une au moins des conditions précitées limite, ou mieux encore évite l'effet de choc mais entraîne

d'autres perturbations telles que l'abaissement volontaire de la concentration en matière sèche, en particulier par introduction d'un électrolyte dilué, ou encore le maintien de cette concentration associée à une granulométrie pigmentaire volontairement plus grossière, autant de moyens que réfute et même refuse l'homme de l'Art.

Aussi, pour satisfaire la mise en oeuvre de suspensions aqueuses pigmentaires formulées à partir de carbonate de calcium dans les conditions qui viennent d'être évoquées en matière de concentration et de finesse, il apparaît souhaitable de pouvoir utiliser dans lesdites suspensions un agent capable simultanément de favoriser le broyage et la dispersion des particules pigmentaires, et d'éliminer l'effet de choc en créant une compatibilité in situ.

C'est pourquoi, depuis de nombreuses années, la littérature spécialisée s'est faite l'écho des recherches pratiquées pour essayer d'éliminer cet "effet de choc" par la proposition d'agents de dispersion et/ou de compatibilité.

Dans un premier document (demande de brevet JP 58-138161), un agent dispersant est décrit pour réaliser des suspensions aqueuses pigmentaires concentrées (de l'ordre de 60% à 70% en poids), de fine granulométrie (de 1 à 3 µm pour du carbonate de calcium précipité). Cet agent dispersant est un copolymère comportant un monomère éthylénique monocarboxylique (à raison de 40 à 99% en mole), un monomère éthylénique dicarboxylique (à raison de 0 à 50% en mole) et un monomère éthylénique ayant un groupement d'esters phosphoriques (à raison de 1 à 10% en mole).

De cette manière, des suspensions aqueuses de carbonate de calcium pigmentaire ont été préparées (à concentration de 70% en poids et granulométrie moyenne comprise entre 1 et 3 micromètres) en présence de l'agent dispersant. Mais il n'a pas été possible d'éviter "l'effet de choc" lors de l'introduction d'un électrolyte concentré comme l'hydroxyde de sodium (à 50% de concentration par exemple) puisqu'une évolution brutale et exagérée de la viscosité a été constatée.

Dans un autre document (FR 88 13511), un agent de compatibilité de dispersion interpigmentaire et de broyage est proposé pour des suspensions aqueuses pigmentaires formulées à partir d'un mélange de pigments minéraux dont l'un au moins est du sulfate de calcium hydraté. Cet agent est un copolymère de formule générale :

$$-(A)_K-(B)_L-(C)_M-$$

dans laquelle (A) est un monomère éthylénique ayant au moins une fonction carboxylique, (B) est un monomère éthylénique possédant au moins une fonction phosphatée ou phosphonée et (C) est un monomère éthylénique du type ester ou substitués, et dans laquelle L prend une valeur comprise entre 5 et 95 parties en poids avec K + L + M = 100 parties en poids, K et M pouvant séparément prendre la valeur 0.

Mais, comme la Demanderesse a pu le constater, l'agent tel qu'il est décrit pour des suspensions aqueuses pigmentaires formulées à partir d'un mélange de pigments minéraux dont l'un au moins est du sulfate de calcium hydraté ne permet pas, à l'égard des suspensions hautement concentrées en carbonate de calcium de dimension pigmentaire, de parvenir dans tous les cas (mais seulement dans certains cas) à la compatibilité recherchée, c'est-à-dire à l'élimination de 1 'effet de choc provoqué par l'introduction d 'un électrolyte sous une forme concentrée.

Dès lors, un objet de l'invention vise à créer des suspensions aqueuses pigmentaires de carbonate de calcium plus concentrées que dans l'art connu, c'est-à-dire ayant une concentration d'au moins 70% en poids, préparées à partir de particules minérales de grandes finesses ayant au moins environ 40% de particules minérales inférieures à 1 µm, et exemptes d'effet de choc lors de l'introduction d'un électrolyte concentré, tel qu'un hydroxyde alcalin.

Enfin, un objet de l'invention vise à créer des suspensions aqueuses pigmentaires de grandes concentrations et finesses débarrassées de l'effet de choc, préparées à partir d'un mélange de pigments minéraux dont l'un au moins est du carbonate de calcium et ne contenant pas de sulfate de calcium hydraté.

## SOMMAIRE DE L'INVENTION

Tous les inconvénients précités, et en particulier l'effet de choc lié à l'introduction d'un électrolyte concentré dans des suspensions aqueuses pigmentaires de carbonate de calcium à haute concentration en matière sèche, disparaissent dès lors que l'on applique à ces suspensions un agent spécifique de compatibilité, de dispersion et/ou de broyage pour ce type de pigment. Cet agent, qui est un copolymère, est sélectionné dans la famille des copolymères décrite dans le brevet FR 88 13511 par le choix spécifique des monomères et leurs quantités relatives mises en oeuvre pour la formation dudit agent.

Selon l'invention, l'utilisation dans des suspensions aqueuses de carbonate de calcium de dimension pigmentaire, de concentration en matière sèche d'au moins 70% en poids, d'un agent de compatibilité, de dispersion et/ou de

broyage dans le but d'inhiber l'effet de choc dû à des ajouts d'électrolytes alcalins concentrés, agent appartenant à la famille des copolymères de formule générale :

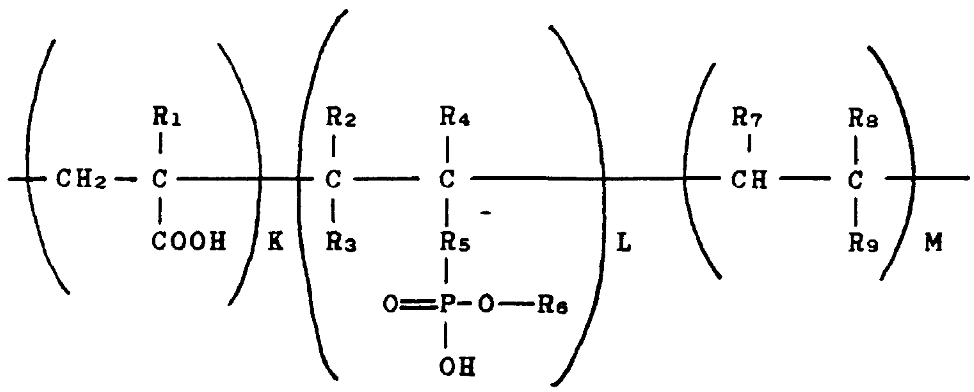

symbolisée par la formule :

$$-(A)_K-(B)_L-(C)_M-$$

dans laquelle le monomère (A) est un monomère éthylénique à fonction monocarboxylique, le monomère (B) est un monomère éthylénique à fonction phosphatée ou phosphonée, le monomère (C) est un monomère éthylénique à fonction dicarboxylique, se caractérise en ce que ledit agent est un copolymère sélectionné dans lequel, bornes incluses :

a) K prend une valeur comprise entre 30 et 65% en poids par rapport à la masse totale,
b) L prend une valeur comprise entre 20 et 60% en poids par rapport à la masse totale,
c) M prend une valeur comprise entre 10 et 45% en poids par rapport à la masse totale,
d) le cumul de L et M est au moins égal à 35% en poids par rapport à la masse totale

avec R1 à R9 tels que définis dans la revendication 1 ainsi qu'en ce que le dit agent est au moins partiellement neutralisé par un agent de neutralisation monovalent choisi dans le groupe des métaux alcalins et préférentiellement dans le groupe constitué par le lithium, le sodium, le potassium.

## DESCRIPTION DETAILLEE DE L'INVENTION

Ainsi, l'art antérieur décrit dans le brevet FR 88 13511 un agent de compatibilité, de dispersion et/ou de broyage pour des suspensions aqueuses pigmentaires formulées à partir d'un mélange de pigments minéraux dont l'un au moins est du sulfate de calcium hydraté pour annihiler l'effet viscosifiant provoqué par la présence simultanée de ce pigment avec d'autres pigments tels que le kaolin, l'oxyde de titane, le carbonate de calcium ou autres.

Mais l'expérience montre que l'usage de cet agent n'élimine pas systématiquement l'effet de choc dû à l'introduction d'un électrolyte concentré dans une suspension aqueuse pigmentaire concentrée de carbonate de calcium. Toutefois, dès lors que l'agent est un copolymère sélectionné selon l'invention par ses composants et leurs quantités relatives, l'effet de choc précité disparaît , l'agent sélectionné ayant la propension à empêcher l'augmentation de la viscosité des suspensions pigmentaires de carbonate de calcium lors de l'introduction dans le milieu de l'électrolyte concentré.

De plus, alors que l'art antérieur propose la réalisation de suspensions aqueuses de carbonate de calcium de dimension pigmentaire à des concentrations au plus de l'ordre de 70% en poids, l'application selon l'invention du copolymère sélectionné permet simultanément d'augmenter les concentrations en matière sèche de ces suspensions bien au-delà de ce seuil et de diminuer la dimension moyenne des particules pigmentaires présentes (environ 40% des particules inférieures à 1 µm) tout en éliminant l'effet de choc provoqué par l'introduction d'un électrolyte concentré en maîtrisant la rhéologie des suspensions pigmentaires destinées au couchage du papier.

Dans la formule précitée de l'agent utilisé selon l'invention :

- $R_1$ est l'hydrogène ou le radical $CH_3$,
- $R_2$ ou $R_3$ sont l'hydrogène ou un alkyle en $C_1$ à $C_4$ et préférentiellement en $C_1$ à $C_3$, ou une fonction carboxylique,
- $R_4$ est l'hydrogène ou un alkyle en $C_1$ à $C_4$,
- $R_5$ est un groupement d'atomes liant le phosphore à la chaîne polymérique par une fonction phosphate

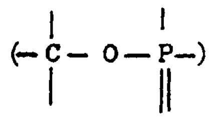

ou par une fonction phosphonate

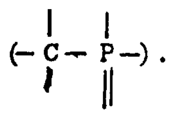

Dans le cas où la fonction est du type phosphate, $R_5$ peut être :

- soit un ester carboxylique d'oxyde d'éthylène ou d'oxyde de propylène répondant à la formule :

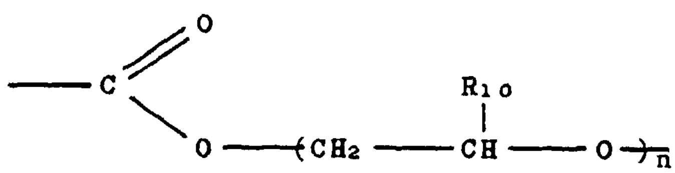

dans laquelle $R_{10}$ peut être l'hydrogène ou un groupement méthyle et n peut prendre des valeurs de l'intervalle 1 à 50 et de préférence 1 à 10,

- soit un ester carboxylique d'alkyle, d'aryle ou d'alkaryle de formule :

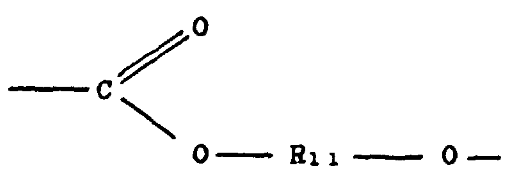

dans laquelle $R_{11}$ peut comporter de 1 à 12 atomes de carbone,

- soit un amide substitué de formule :

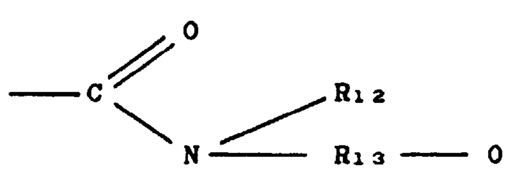

dans laquelle $R_{12}$ est l'hydrogène ou un alkyle en $C_1$ à $C_4$ et $R_{13}$ peut être un alkyle en $C_1$ à $C_4$,

- soit de l'oxygène.

Dans le cas où la fonction est du type phosphonate, $R_5$ peut être un alkyle en $C_1$ à $C_4$, un ester en $C_1$ à $C_{12}$ et de préférence en $C_1$ à $C_3$, ou un amide substitué,

- $R_6$ peut être l'hydrogène, un cation, une amine, un alkyle en $C_1$ à $C_3$, un ester en $C_1$ à $C_4$ ou un amide substitué,
- $R_7$, $R_8$ et $R_9$ peuvent être l'hydrogène ou un groupement comportant une fonction carboxylique.

Ces copolymères acides résultent de la copolymérisation selon les procédés connus, en présence d'initiateurs et des régulateurs appropriés, en milieu aqueux, alcoolique, hydroalcoolique, aromatique, aliphatique ou dans un solvant halogéné, d'au moins un monomère éthylénique à fonction monocarboxylique (A), d'au moins un monomère éthylénique à fonction phosphatée ou phosphonée (B), et d'au moins un monomère éthylénique à fonction dicarboxylique (C) à pression atmosphérique ou sous pression.

Ainsi, le milieu de polymérisation peut être l'eau, le méthanol, l'éthanol, le propanol, l'isopropanol, les butanols, ou encore le diméthylformamide, le diméthylsulfoxyde, le tétrahydrofurane, l'acétone, la méthyléthylcétone, l'acétate d'éthyle, l'acétate de butyle, l'hexane, l'heptane, le benzène, le toluène, l'éthylbenzène, le xylène, le mercaptoéthanol, le tertiododécylmercaptan, l'acide thioglycolique et ses esters, le n-dodécylmercaptan, les acides acétique, tartrique, lactique, citrique, gluconique, glucoheptonique, l'acide 2-mercaptopropionique, le thiodiéthanol, les solvants halogénés comme le tétrachlorure de carbone, le chloroforme, le dichlorométhane, les éthers de monopropylèneglycol, diéthylèneglycol.

Les copolymères sélectionnés destinés à être utilisés selon l'invention comme agent de compatibilité, de dispersion et/ou de broyage sont choisis parmi ceux ayant une viscosité spécifique comprise entre 0,35 et 0,85 et préférentiellement entre 0,40 et 0,70.

La viscosité spécifique des copolymères sélectionnés, qui est symbolisée par la lettre "η", est déterminée de la manière suivante :

On prépare une solution de copolymère sous forme de sel sodique par dissolution de 50 g sec du copolymère dans un litre d'une solution d'eau distillée contenant 60 g de chlorure de sodium.

Puis on mesure avec un viscosimètre capillaire placé dans un bain thermostaté à 25° C le temps d'écoulement d'un volume donné de la solution précitée contenant le copolymère alcalin, ainsi que le temps d'écoulement du même volume de solution aqueuse de chlorure de sodium dépourvue dudit copolymère. Il est alors possible de définir la viscosité spécifique " " grâce à la relation suivante :

$$\eta = \frac{\text{(temps d'écoulement de la solution de copolymère) - (temps d'écoulement de la solution NaCl)}}{\text{(temps d'écoulement de la solution NaCl)}}$$

Le tube capillaire est généralement choisi de telle manière que le temps d'écoulement de la solution de NaCl dépourvue de copolymère soit d'environ 90 à 100 secondes, donnant ainsi des mesures de viscosité spécifique d'une très bonne précision.

Dès la fin de la polymérisation, les copolymères acides sélectionnés peuvent être recueillis sous la forme d'une solution aqueuse.

Puis, les copolymères sélectionnés (en solution aqueuse) sont totalement ou au moins partiellement neutralisés par un agent de neutralisation monovalent choisi dans le groupe constitué par les cations alcalins et assimilés, en particulier le lithium, le sodium, le potassium. Toutefois, à cet agent monovalent peut être associé un agent de neutralisation ayant une fonction polyvalente. Cet agent peut être associé à un agent du groupe des alcalino-terreux ou assimilés, préférentiellement le calcium et le magnésium.

En pratique, la phase liquide résultant de la copolymérisation et contenant le copolymère acide sélectionné peut être utilisée sous une forme salifiée comme agent de compatibilité, mais elle peut également être séchée par tous moyens connus pour en éliminer cette phase et isoler le copolymère sous la forme d'une fine poudre et être utilisée sous cette autre forme comme agent de compatibilité, dispersion ou broyage.

Dans une plus large perspective, l'agent utilisé selon l'invention peut être mis en oeuvre selon la méthode de préparation d'une suspension aqueuse pigmentaire contenant le carbonate de calcium et ne contenant pas de sulfate de calcium hydraté, ladite méthode comportant les étapes de réalisation suivantes:

a) on réalise sous agitation la préparation par délitage d'une suspension aqueuse de carbonate de calcium en introduisant d'abord tout ou partie de l'agent de compatibilité dans la phase aqueuse, puis le matériaux minéral, de manière à obtenir une suspension fluide et souhaitablement homogène.

b) on introduit en continu la suspension préparée selon (a) dans une zone de broyage constituée par un broyeur

à micro-éléments,

c) on maintient la température de la suspension au cours du broyage à un niveau inférieur à 100° C et préférentiellement comprise entre la température ambiante et 80° C,

d) on malaxe la suspension à broyer en présence des micro-éléments pendant le temps nécessaire à l'obtention de la granulométrie recherchée,

e) éventuellement, on introduit au cours du broyage en au moins une fois une fraction complémentaire de l'agent,

f) à la sortie du broyeur, on sépare en continu la suspension de carbonate de calcium finement broyée d'avec les corps broyants et les particules refusées parce que trop grossières,

g) on introduit dans la suspension finement broyée l'électrolyte alcalin sous forme concentrée avant ou après l'avoir éventuellement formulée pour l'application papetière par ajouts des divers agents habituellement mis en oeuvre et accessoirement au moins un autre type de pigment.

D'une manière générale, l'électrolyte introduit est choisi dans le groupe constitué par les hydroxydes alcalins hydrosolubles et plus particulièrement l'hydroxyde de sodium ou de potassium.

Si le(s) pigment(s) mis en oeuvre ont dès l'origine une courbe granulométrique conforme aux exigences de l'utilisateur, seules les étapes (a) et (g) sont réalisées. Dans le cas contraire, on procède aux étapes suivantes, c'est-à-dire (b) à (g), afin de produire une suspension aqueuse de pigments affinés par broyage et rendus compatibles à l'électrolyte concentré introduit dans la dernière étape.

L'agent mis en oeuvre dans l'application selon l'invention est introduit dans la suspension aqueuse pigmentaire à raison de 0,05 à 4% en poids de matière active par rapport au poids sec des matériaux minéraux, et préférentiellement à raison de 0,5 à 2,0%.

La suspension recueillie à l'issue du délitage et/ou du broyage a généralement une concentration en matière sèche d'au moins 70% et préférentiellement comprise dans l'intervalle de 74 à 80% en poids, la dimension des particules pigmentaires obtenues étant définie en cas de broyage par l'utilisateur.

Dès lors, la suspension pigmentaire de carbonate de calcium affiné, seul ou associé à d'autres pigments, comme cela a été exprimé antérieurement dans l'étape (g) tels que kaolin, talc, oxyde de titane ou autres, et de caractéristiques rhéologiques stabilisées grâce à l'application selon l'invention de l'agent de compatibilité sélectionné, peut être avantageusement utilisée comme charge pigmentaire pour l'enduction du papier.

La portée et l'intérêt de l'invention seront mieux perçus grâce aux exemples illustratifs et comparatifs à l'égard de l'art antérieur.

<u>Exemple 1</u>

Cet exemple, dont le but est d'illustrer l'art connu, concerne la préparation de suspensions de carbonate de calcium par délitage.

Dans ce but, plusieurs suspensions de carbonate de calcium provenant du gisement d'Orgon (France) ont été préparées avec 20 types d'agents connus pour leur action dispersante et/ou d'aide au broyage, tels qu'ils sont décrits dans l'art antérieur.

Le diamètre médian du carbonate de calcium avant le broyage était de 40 micromètres.

Ces essais ont été exécutés selon les mêmes critères expérimentaux en effectuant le broyage dans le même appareillage afin que les résultats obtenus puissent être comparés.

Pour chaque essai, on a préparé une suspension du carbonate de calcium à une concentration de 76% en matière sèche exprimée en pour cent en poids.

L'agent de broyage était présent dans les suspensions à raison de 1% en poids de matière sèche par rapport à la masse du carbonate de calcium à broyer.

Chaque suspension ainsi préparée a été placée dans un broyeur du type Dyno-Mill à cylindre fixe et impulseur tournant, dont le corps broyant était constitué par des billes de corindon de diamètre compris dans l'intervalle 0,6 millimètre à 1,0 millimètre.

Le volume total occupé par le corps broyant était de 1 200 millilitres tandis que sa masse était de 2,9 kilogrammes.

La chambre de broyage avait un volume de 2 500 millilitres.

La vitesse circonférentielle du broyeur était de 10 mètres par seconde.

La suspension de carbonate de calcium était recyclée à raison de 18 litres par heure.

La sortie du broyeur Dyno-Mill était munie d'un séparateur de mailles 300 microns, permettant de séparer la suspension résultant du broyage et le corps broyant.

La température lors de chaque essai de broyage était maintenue entre 60° C et 70° C.

Puis, vingt-quatre heures après le broyage, la viscosité de la suspension microparticulaire était mesurée à l'aide d'un viscosimètre Brookfield, à une température de 20° C et à la vitesse de rotation 100 tours par minute.

De même, à la fin du broyage, la granulométrie était déterminée par l'intermédiaire du granulomètre Sédigraph 5 100 de la société MICROMERITICS.

Les suspensions affinées puis refroidies à la température ambiante ont reçu sous agitation l'électrolyte alcalin (hydroxyde de sodium) de façon à tester leur capacité à résister à l'effet de choc ionique classiquement provoqué par cette introduction.

Toutes les caractéristiques de l'agent dispersant et/ou de broyage (composition en monomères, sa viscosité spécifique, et le(s) ion(s) de neutralisation) et des suspensions affinées (teneur en matière sèche, les viscosités Brookfield en centipoises après 24 heures, avant et après ajout de l'hydroxyde de sodium à 50 % de concentration à raison de 0,8% en poids sec/sec et leur comportement après cet ajout se manifestant par une note de 0 à 5) ont été rassemblées dans le tableau 1 ci-après (essais 1 à 20).

TABLEAU 1

ART ANTERIEUR

| NUMERO DE L'ESSAI | CARACTERISTIQUES DE L'AGENT<br>COMPOSITION | <br>VISCOSITE SPECIFIQUE | <br>IONS DE NEUTRAL. | CARACTERISTIQUES DE LA SUSPENSION AFFINEE<br>M.S. % | <br>GRANULO % < 1Micron | VISCOSITE APRES 24 H<br>AVANT<br>100T | <br>APRES<br>10 T | <br>AJOUT<br>100T | APPRECIATION |
|---|---|---|---|---|---|---|---|---|---|
| 1 | 100 AA | 0,54 | 100 Na | 76 | 60 | 850 | prise en | masse | 0 |
| 2 | 100 AA | 0,54 | 50 Na<br>50 Mg | 76 | 60 | 840 | prise en | masse | 0 |
| 3 | 100 AA | 0,54 | 70 Na<br>30 Ca | 76 | 60 | 730 | prise en | masse | 0 |
| 4 | 100 AA | 0,54 | 100 NH4 | 76 | 58 | 530 | 3400 | 850 | 0 * |
| 5 | PO4TSP 18OE | | | 76 | 60 | 290 | prise en | masse | 0 |
| 6 | 30 AA<br>70 AM | 0,5 | 100 Na | 76 | 51 | 1100 | prise en | masse | 0 |
| 7 | 50 AA<br>50 AEG | 0,4 | 100 Na | 76 | 56 | 4850 | prise en | masse | 0 |
| 8 | 75 AA<br>25 AITC | 0,4 | 100 Na | 76 | 56 | 590 | 88000 | 30400 | 0 |
| 9 | 60 AA<br>40 PO4 MAEG | 0,6 | 100 Na | 76 | 47 | 280 | 89000 | 10000 | 0 |
| 10 | 57 AA<br>25 AAM<br>18 PO4 MAEG | 0,7 | 100 Na | 76 | 48 | 350 | 80000 | 14400 | 0 |
| 11 | 30 AA<br>30 MAM<br>40 PO4 MAEG | 0,53 | 100 Na | 76 | 47 | 420 | prise en | masse | 0 |
| 12 | 90 AA<br>5 AITC<br>5 PO4 MAEG | 0,5 | 100 Na | 76 | 56 | 290 | 120000 | 20000 | 0 |
| 13 | 90 AA<br>5 AITC<br>5 PO4 MAEG | 0,5 | 100 NH4 | 76 | 56 | 340 | 46000 | 5700 | 0 * |
| 14 | 80 AA<br>10 AITC<br>10 PO4 MAEG | 0,5 | 100 Na | 76 | 46 | 430 | 75000 | 8150 | 0 |
| 15 | 75 AA<br>10 AITC<br>15 PO4 MAEG | 0,46 | 100 Na | 76 | 55 | 680 | 300000 | 100000 | 0 |
| 16 | 75 AA<br>15 AITC<br>10 PO4 MAEG | 0,41 | 100 Na | 76 | 60 | 890 | 92000 | 15200 | 0 |
| 17 | 75 AA<br>5 AITC<br>20 PO4 MAEG | 0,46 | 100 Na | 76 | 54 | 385 | 400000 | 200000 | 0 |
| 18 | 60 AA<br>30 AITC<br>10 PO4MAEG | 0,4 | 100 Na | 76 | 52 | 355 | 100000 | 11200 | 0 |
| 19 | 60 AA<br>30 AITC<br>10 PO4 MAEG | 0,4 | 100 NH4 | 76 | 49 | 420 | 1500 | 580 | 0 * |
| 20 | 70 AA<br>10 AITC<br>20 PO4 MAEG | 0,47 | 100 Na | 76 | 52 | 235 | 102000 | 8800 | 0 |

AA=Acide Acrylique
AM=Acide Méthacrylique
AAM=Acrylamide
AEG=Acrylate d'EthylèneGlycol
AITC=Acide Itaconique
ANMA=Anhydride Maleique
APP=AcidePropènePhosphonique
AAPP=Acide AcrylamidoMéthylPropènePhosphonique
PO4MAEG=Phosphate de Méthacrylate d'EthylèneGlycol
PO4AEG=Phosphate d'Acrylate d'EthylèneGlycol
PO4TSP18OE=Phosphate de TriStyrilPhénol18OE
PO4AL=Phosphate d'allyle
MAM=Méthacrylaté de méthyle

Na= ion sodium
Ca= ion calcium
Mg= ion magnésium
K= ion potassium
Li= ion lithium
TEA= triéthanol amine
NH4= ion ammonium

0*=inapplicable dégagement ammoniac
MS= matière sèche
GRANULO= granulométrie
NEUTRAL= neutralisation

NOTATION
0=très mauvais
1= mauvais
2= médiocre
3= moyen
4= bon
5= très bon

Le tableau précité conduit aux commentaires suivants, à savoir qu'ayant mis en oeuvre des agents dispersants et/ou de broyage bien connus de l'art qui sont :

dans les essais 1 à 5, des homopolymères d'acide acrylique ou un phosphate organique oxyéthylé,

dans les essais 6 à 9, des copolymères éthyléniques comprenant de l'acide acrylique et de l'acide méthacrylique, ou un monomère acrylique hydroxylé (AEG), ou un acide éthylénique dicarboxylique (AITC), ou un acide éthylénique phosphoré ($PO_4$ MAEG).

dans les essais 10 à 20, des terpolymères de l'acide acrylique, du phosphate de méthacrylate d'éthylène glycol et un amide (acrylamide), ou un ester acrylique (MAM), ou un monomère dicarboxylique (AITC).

Aucun de ces agents ne manifeste une capacité à résister à l'effet de choc (augmentation brutale et importante de la viscosité) provoqué par l'ajout de l'électrolyte concentré (hydroxyde de sodium).

Toutefois, les essais 4, 13 et 19, bien que donnant des résultats relativement bons, ne peuvent être retenus car inexploitables industriellement en raison du fort dégagement d'ammoniac lors de la préparation de la sauce de couchage et de son application sur papier.

Exemple 2

Cet exemple, destiné à illustrer dans le cadre de l'invention l'influence du taux de motifs phosphorés, concerne le broyage de carbonate de calcium en présence de l'agent de compatibilité, dispersion et/ou broyage tel qu'appliqué selon l'invention, comportant les trois types de monomères pour lequel L peut prendre les valeurs de 20 à 60 conformément à l'invention, tandis que K peut prendre des valeurs comprises entre 10 et 65 et M peut prendre des valeurs comprises entre 10 et 30.

A travers les essais 21 à 29, on a pu modifier la formule du copolymère en faisant varier les divers radicaux quantitativement ainsi que les viscosités spécifiques des copolymères mis en oeuvre, étant entendu que lesdits copolymères ont été complètement salifiés jusqu'à l'obtention d'un pH compris entre 8 et 9 au moyen de l'hydroxyde de sodium.

Le broyage a été effectué selon le protocole décrit dans l'exemple 1 en utilisant les mêmes matières premières et en conservant les mêmes paramètres de fonctionnement.

Au terme du broyage, les suspensions aqueuses de carbonate de calcium ont été refroidies à température ambiante et ont reçu sous agitation l'électrolyte concentré (l'hydroxyde de sodium à concentration de 50%) à raison de 0,8% en poids sec/sec.

Toutes les caractéristiques de l'agent de compatibilité, de dispersion et/ou de broyage (composition en monomères, sa viscosité spécifique, et le(s) ion(s) de neutralisation) et des suspensions affinées (teneur en matière sèche, les viscosités Brookfield en centipoises après 24 heures, avant et après ajout de l'hydroxyde de sodium à 50% de concentration à raison de 0,8% en poids sec/sec, et leur comportement après cet ajout se manifestant par une note de 0 à 5) ont été rassemblées dans le tableau 2 ci-après (essais 21 à 29).

TABLEAU 2

INFLUENCE DU TAUX DE MOTIF PHOSPHORE

| NUMERO DE L'ESSAI | CARACTERISTIQUES DE L'AGENT: COMPOSITION | VISCOSITE SPECIFIQUE | ION DE NEUTRAL. | CARACTERISTIQUES DE LA SUSPENSION AFFINEE: M.S. % | GRANULO %<1 Micron | VISCOSITE APRES 24 H AVANT AJOUT 100 T | APRES AJOUT 10 T | APRES AJOUT 100 T | APPRECIATION |
|---|---|---|---|---|---|---|---|---|---|
| 21 | 65 AA<br>15 AITC<br>20 PO4MAEG | 0,49 | 100 Na | 76 | 51 | 455 | 24000 | 3150 | 3 |
| 22 | 60 AA<br>15 AITC<br>25 PO4 MAEG | 0,48 | 100 Na | 76 | 54 | 450 | 20000 | 2500 | 3 |
| 23 | 60 AA<br>10 AITC<br>30 PO4 MAEG | 0,54 | 100 Na | 76 | 46 | 590 | 12000 | 1700 | 3,5 |
| 24 | 45 AA<br>20 AITC<br>35 PO4 MAEG | 0,44 | 100 Na | 76 | 47 | 315 | 11300 | 1600 | 3,5 |
| 25 | 35 AA<br>30 AITC<br>35 PO4 MAEG | 0,49 | 100 Na | 76 | 44 | 255 | 4000 | 760 | 4 |
| 26 | 35 AA<br>15 AITC<br>50 PO4 MAEG | 0,58 | 100 Na | 76 | 42 | 525 | 5300 | 770 | 4 |
| 27 | 30 AA<br>10 AITC<br>60 PO4 MAEG | 0,46 | 100 Na | 76 | 41 | 365 | 8000 | 1220 | 4 |
| *28 | 10 AA<br>30 AITC<br>60 PO4 MAEG | 0,83 | 100 Na | 76 | 30 | 325 | 6000 | 1000 | 2 |
| *29 | 10 AA<br>30 AITC<br>60 PO4 MAEG | 0,6 | 100 Na | 76 | 27 | 255 | 600 | 230 | 2 |

AA=Acide Acrylique
AM=Acide Méthacrylique
AAM=Acrylamide
AEG=Acrylate d'EthylèneGlycol
AITC=Acide Itaconique
ANMA=Anhydride Maleique
APP=AcidePropènePhosphonique
AAPP=Acide AcrylamidoMéthylPropènePhosphonique
PO4MAEG=Phosphate de Méthacrylate d'EthylèneGlycol
PO4AEG=Phosphate d'Acrylate d'EthylèneGlycol
PO4TSP18OE=Phosphate de TriStyrilPhénol18OE
PO4AL=Phosphate d'allyle
MAM=Méthacrylate de méthyle

Na= ion sodium
Ca= ion calcium
Mg= ion magnésium
K= ion potassium
Li= ion lithium
TEA= triéthanol amine
NH4= ion ammonium

0*=inapplicable dégagement ammoniac
MS= matière sèche
GRANULO= granulométrie
NEUTRAL= neutralisation

NOTATION
0=très mauvais
1= mauvais
2= médiocre
3= moyen
4= bon
5= très bon

* Exemples Comparatifs

De ce tableau 2, et par comparaison avec le tableau 1, il apparaît que les viscosités des suspensions mesurées dans les mêmes conditions que celles de l'exemple 1, après l'introduction de l'hydroxyde de sodium à l'état concentré, sont notablement plus faibles que dans l'art antérieur. De ce fait, les essais 21 à 27 montrent les limites de l'indice L du motif phosphoré qui doit être compris entre 20% et 60% (note d'appréciation 3 à 4) associé à l'indice K compris

entre 30% et 65% et l'indice M compris entre 10% et 45%. Ainsi, les essais 21 à 27 montrent la sélection qu'il faut réaliser pour le motif phosphoré de l'agent (L compris entre 20% et 60%) en vue d'éliminer l'effet de choc dû à l'introduction de l'électrolyte concentré tout en lui conservant un pouvoir de broyage suffisant.

Quant aux essais 28 et 29, ils révèlent que, malgré la présence d'une quantité du monomère phosphaté compatible avec les limites précitées, l'un au moins des autres monomères (présentement A) étant hors des limites de l'invention, il ne peut y avoir simultanément un compromis entre l'aptitude au broyage et la capacité à résister à l'effet de choc.

Exemple 3

Cet exemple est destiné à illustrer l'objet de l'invention par la sélection des monomères (A), (B) et (C) dans les pourcentages revendiqués, c'est-à-dire pour K compris entre 30% et 65% en poids, L compris entre 20% et 60% et M compris entre 10% et 45% en poids.

Les essais 30 à 41 concernent la sélection d'agents formés de copolymères comprenant 30% à 55% d'acide acrylique, 10% à 40% d'acide itaconique et 20% à 60% de phosphate de méthacrylate d'éthylène glycol ($PO_4$ MAEG).

Les essais 42 à 45 concernent la sélection d'agents formés de copolymères comprenant 40% d'acide acrylique, 30% d'acide itaconique et différents monomères phosphorés (phosphate ou phosphonate) dans une proportion de 30%.

L'essai 46 concerne la sélection d'un agent formé d'un copolymère comprenant 40% d'acide acrylique, 35% de $PO_4$ MAEG et 25% d'anhydride maléique.

L'essai 47 concerne un agent sélectionné qui est un copolymère comprenant 40% d'acide méthacrylique 30% de $PO_4$ MAEG et 30% d'acide itaconique.

Enfin, l'essai 48 concerne la sélection d'un agent formé du copolymère comprenant 22,5% d'acide méthacrylique, 22,5% d'acide acrylique, 35% de $PO_4$ MAEG et 20% d'acide itaconique.

Le broyage a été effectué selon le protocole décrit dans l'exemple 1 en utilisant les mêmes matières premières et en conservant les mêmes paramètres de fonctionnement.

Au terme du broyage, les suspensions aqueuses de carbonate de calcium ont été refroidies à température ambiante et ont reçu sous agitation l'hydroxyde de sodium à concentration de 50% à raison de 0,8% en poids sec/sec.

Toutes les caractéristiques de l'agent de compatibilité, de dispersion et/ou de broyage (composition en monomères, sa viscosité spécifique, et le(s) ion(s) de neutralisation) et des suspensions affinées (teneur en matière sèche, les viscosités Brookfield en centipoises après 24 heures, avant et après ajout de l'hydroxyde de sodium à 50 % de concentration, à raison de 0,8% en poids sec/sec, et de leur comportement après cet ajout se manifestant par une note de 0 à 5) ont été rassemblées dans le tableau 3 ci-après (essais 30 à 48).

DOMAINE DE L'INVENTION

TABLEAU 3

| NUMERO DE L'ESSAI | CARACTERISTIQUES DE L'AGENT: COMPOSITION | CARACTERISTIQUES DE L'AGENT: VISCOSITE SPECIFIQUE | CARACTERISTIQUES DE L'AGENT: ION DE NEUTRAL. | CARACTERISTIQUES DE LA SUSPENSION AFFINEE: M.S. % | GRANULO <1 MICRON | VISCOSITE AVANT 100 T | APRES 24 H: APRES 10 T | APRES 24 H: AJOUT 100 T | APPRECIATION |
|---|---|---|---|---|---|---|---|---|---|
| 30 | 55 AA<br>10 AITC<br>35 PO4 MAEG | 0,62 | 100 Na | 76 | 47 | 705 | 6400 | 1120 | 4 |
| 31 | 50 AA<br>15 AITC<br>35 PO4 MAEG | 0,4 | 100 Na | 76 | 43 | 650 | 28000 | 3500 | 3,5 |
| 32 | 50 AA<br>30 AITC<br>20 PO4 MAEG | 0,49 | 100 Na | 76 | 49 | 320 | 11600 | 1920 | 3,5 |
| 33 | 50 AA<br>25 AITC<br>25 PO4 MAEG | 0,49 | 100 Na | 76 | 50 | 380 | 21400 | 2660 | 3,5 |
| 34 | 50 AA<br>20 AITC<br>30 PO4 MAEG | 0,48 | 100 Na | 76 | 46 | 320 | 15500 | 2200 | 3,5 |
| 35 | 45 AA<br>15 AITC<br>40 PO4 MAEG | 0,55 | 100 Na | 76 | 51,5 | 640 | 26000 | 2900 | 3,5 |
| 36 | 45 AA<br>20 AITC<br>35 PO4 MAEG | 0,44 | 100 Na | 76 | 47 | 315 | 11300 | 1600 | 4 |
| 37 | 40 AA<br>30 AITC<br>30 PO4MAEG | 0,45 | 100 Na | 76 | 43 | 550 | 15500 | 2350 | 3,5 |
| 38 | 35 AA<br>40 AITC<br>25 PO4MAEG | 0,48 | 100 Na | 76 | 41 | 400 | 13600 | 2100 | 3,5 |
| 39 | 35 AA<br>30 AITC<br>35 PO4 MAEG | 0,49 | 100 Na | 76 | 44 | 255 | 4000 | 760 | 5 |
| 40 | 30 AA<br>10 AITC<br>60 PO4 MAEG | 0,46 | 100 Na | 76 | 41 | 460 | 15000 | 1900 | 3,5 |
| 41 | 45 AA<br>20 AITC<br>35 PO4 MAEG | 0,5 | 100 Na | 76 | 46 | 500 | 15000 | 2160 | 3,5 |
| 42 | 40 AA<br>30 AITC<br>30 PO4AEG | 0,48 | 100 Na | 76 | 41 | 460 | 13200 | 2000 | 3,5 |
| 43 | 40 AA<br>30 AITC<br>30 APP | 0,52 | 100 Na | 76 | 41 | 560 | 18000 | 3100 | 3,5 |
| 44 | 40 AA<br>30 AITC<br>30 AAPP | 0,51 | 100 Na | 76 | 42 | 520 | 11800 | 1800 | 3,5 |
| 45 | 40 AA<br>30 AITC<br>30 PO4AL | 0,55 | 100 Na | 76 | 49 | 650 | 17000 | 2820 | 3,5 |
| 46 | 40 AA<br>25 ANMA<br>35 PO4 MAEG | 0,52 | 100 Na | 76 | 43 | 720 | 21000 | 2950 | 3,5 |
| 47 | 40 AM<br>30 AITC<br>30 PO4MAEG | 0,52 | 100 Na | 76 | 40 | 620 | 14800 | 2700 | 3,5 |
| 48 | 22,5 AM<br>22,5 AA<br>20 AITC<br>35 PO4MAEG | 0,54 | 100 Na | 76 | 45,5 | 400 | 7200 | 1400 | 4 |

AA=Acide Acrylique
AM=Acide Méthacrylique
AAM=Acrylamide
AEG=Acrylate d'EthylèneGlycol
AITC=Acide Itaconique
ANMA=Anhydride Maleique
APP=AcidePropènePhosphonique
AAPP=Acide AcrylamidoMéthylPropènePhosphonique
PO4MAEG=Phosphate de Méthacrylate d'EthylèneGlycol
PO4AEG=Phosphate d'Acrylate d'EthylèneGlycol
PO4TSP18OE=Phosphate de TriStyrilPhénol18OE
PO4AL=Phosphate d'allyle
MAM=Méthacrylate de méthyle

Na= ion sodium
Ca= ion calcium
Mg= ion magnésium
K= ion potassium
Li= ion lithium
TEA= triéthanol amine
NH4= ion ammonium

0*=inapplicable dégagement ammoniac
MS= matière sèche
GRANULO= granulométrie
NEUTRAL= neutralisation

NOTATION
0=très mauvais
1= mauvais
2= médiocre
3= moyen
4= bon
5= très bon

De ce tableau et par comparaison avec le tableau 1, il apparaît qu'il est possible, dans les conditions précitées selon l'invention, d'obtenir des suspensions de carbonate de calcium simultanément bien affinées, concentrées et résistantes à l'effet de choc dû à l'introduction d'un électrolyte concentré.

## Exemple 4

Cet exemple est destiné à illustrer, dans le cadre de l'invention, l'influence de la viscosité spécifique de l'agent de compatibilité, dispersion et/ou de broyage et concerne l'application dudit agent au broyage de carbonate de calcium.

Dans ce cadre, plusieurs expérimentations ont été conduites (essais 49 à 54) en mettant en oeuvre un agent ayant la même composition qualitative mais des viscosités spécifiques différentes pour chaque essai.

Le broyage a été effectué selon le protocole décrit dans l'exemple 1 en utilisant les mêmes matières premières et en conservant les mêmes paramètres de fonctionnement.

Au terme du broyage, les suspensions aqueuses de carbonate de calcium ont été refroidies à température ambiante et ont reçu sous agitation l'hydroxyde de sodium à concentration de 50% à raison de 0,8% en poids sec/sec.

Toutes les caractéristiques de l'agent de compatibilité, de dispersion et/ou de broyage (composition en monomères, sa viscosité spécifique, et le(s) ion(s) de neutralisation) et des suspensions affinées (teneur en matière sèche, les viscosités Brookfield en centipoises après 24 heures avant et après ajout de l'hydroxyde de sodium à 50% de concentration à raison de 0,8% en poids sec/sec, et leur comportement après cet ajout se manifestant par une note de 0 à 5) ont été rassemblées dans le tableau 4 ci-après (essais 49 à 54).

TABLEAU 4 INFLUENCE DE LA VISCOSITE SPECIFIQUE

| | CARACTERISTIQUES DE L'AGENT | | | CARACTERISTIQUES DE LA SUSPENSION AFFINEE | | | | | |
|---|---|---|---|---|---|---|---|---|---|
| NUMERO DE L'ESSAI | COMPOSITION | VISCOSITE SPECIFIQUE | ION DE NEUTRAL. | M.S. % | GRANULO %<1 Micron | VISCOSITE APRES 24 H AVANT 100 T | APRES AJOUT 10T | 100T | APPRECIATION |
| 49 | 45 AA<br>20 AITC<br>35 PO4 MAEG | 0,3 | 100 Na | 76 | 30 | 400 | 30000 | 4000 | 2 |
| 50 | 45 AA<br>20 AITC<br>35 PO4 MAEG | 0,44 | 100 Na | 76 | 47 | 315 | 11300 | 1600 | 4 |
| 51 | 45 AA<br>20 AITC<br>35 PO4 MAEG | 0,52 | 100 Na | 76 | 50 | 470 | 10000 | 1520 | 4 |
| 52 | 45 AA<br>20 AITC<br>35 PO4 MAEG | 0,61 | 100 Na | 76 | 46 | 710 | 13400 | 1840 | 4 |
| 53 | 45 AA<br>20 AITC<br>35 PO4 MAEG | 0,8 | 100 Na | 76 | 40 | 420 | 25000 | 2900 | 3,5 |
| 54 | 45 AA<br>20 AITC<br>35 PO4 MAEG | 1 | 100 Na | 76 | 27 | 320 | 6800 | 1040 | 2 |

AA=Acide Acrylique
AM=Acide Méthacrylique
AAM=Acrylamide
AEG=Acrylate d'EthylèneGlycol
AITC=Acide Itaconique
ANMA=Anhydride Maleique
APP=AcidePropènePhosphonique
AAPP=Acide AcrylamidoMéthylPropènePhosphonique
PO4MAEG=Phosphate de Méthacrylate d'EthylèneGlycol
PO4AEG=Phosphate d'Acrylate d'EthylèneGlycol
PO4TSP18OE=Phosphate de TriStyrilPhénol18OE
PO4AL=Phosphate d'allyle
MAM=Méthacrylate de méthyle

Na= ion sodium
Ca= ion calcium
Mg= ion magnésium
K= ion potassium
Li= ion lithium
TEA= triéthanol amine
NH4= ion ammonium

0*=inapplicable dégagement ammoniac
MS= matière sèche
GRANULO= granulométrie
NEUTRAL= neutralisation

NOTATION
0=très mauvais
1= mauvais
2= médiocre
3= moyen
4= bon
5= très bon

De ce tableau et par comparaison avec le tableau 1, il apparaît que l'agent mis en oeuvre selon l'invention doit avoir une viscosité spécifique supérieure à 0,3 et inférieure à 1 (note d'appréciation 2) pour conduire à l'obtention après broyage d'une suspension concentrée (76%) de carbonate de calcium, d'une part de granulométrie acceptable (au moins 40% des particules inférieures à 1 µm), et d'autre part ayant la propriété de résister à l'effet de choc dû à l'introduction de l'électrolyte concentré (hydroxyde de sodium).

Ainsi, il s'établit que la viscosité spécifique dudit agent dans l'application selon l'invention doit être comprise entre 0,35 et 0,85, bornes incluses.

Exemple 5

Cet exemple illustre selon l'invention l'influence de l'ion de salification de l'agent de compatibilité, de dispersion et/ou de broyage mis en oeuvre dans des suspensions concentrées de carbonate de calcium.

Pour ce faire, des expérimentations de broyage ont été conduites (essais 55 à 64) en présence de l'agent constitué par un copolymère de même composition et viscosité spécifique, mais dont les fonctions acides ont été salifiées (essais 55 à 63) par les ions sodium, lithium, potassium, magnésium, calcium, ammonium, ou encore par de la triéthanolamine, pris seuls ou pour certains en mélange, ou n'ont pas été salifiées (essai 64) à titre de comparaison.

Le broyage a été effectué selon le protocole décrit dans l'exemple 1 en utilisant les mêmes matières premières et en conservant les mêmes paramètres de fonctionnement.

Au terme du broyage, les suspensions aqueuses de carbonate de calcium ont été refroidies à température ambiante et ont reçu sous agitation l'hydroxyde de sodium à concentration de 50% à raison de 0,8% en poids sec/sec.

Toutes les caractéristiques de l'agent de compatibilité, de dispersion et/ou de broyage (composition en monomères, sa viscosité spécifique, et le(s) ion(s) de neutralisation) et des suspensions affinées (teneur en matière sèche, les viscosités Brookfield en centipoises après 24 heures, avant et après ajout de l'hydroxyde de sodium à 50% de concentration à raison de 0,8% en poids sec/sec, et leur comportement après cet ajout se manifestant par une note de 0 à 5) ont été rassemblées dans le tableau 5 ci-après.

TABLEAU 5

INFLUENCE DU CATION DE NEUTRALISATION

| NUMERO DE L'ESSAI | CARACTERISTIQUES DE L'AGENT: COMPOSITION | VISCOSITE SPECIFIQUE | ION DE NEUTRAL. | CARACTERISTIQUES DE LA SUSPENSION AFFINEE: M.S. % | GRANULO %<1M ICRON | VISCOSITE APRES 24H AVANT 100T | APRES 10 T | AJOUT 100 T | APPRECIATION |
|---|---|---|---|---|---|---|---|---|---|
| 55 | 45 AA<br>20 AITC<br>35 PO4 MAEG | 0,52 | 100 Na | 76 | 44 | 630 | 8400 | 1390 | 4 |
| 56 | 45 AA<br>20 AITC<br>35 PO4 MAEG | 0,52 | 100 K | 76 | 48 | 780 | 50000 | 5850 | 2,5 |
| 57 | 45 AA<br>20 AITC<br>35 PO4 MAEG | 0,52 | 100 Li | 76 | 45 | 350 | 1250 | 435 | 4 |
| *58 | 45 AA<br>20 AITC<br>35 PO4 MAEG | 0,52 | 100 Mg | 76 | pas possible ne broye pas | | | | 0 |
| *59 | 45 AA<br>20 AITC<br>35 PO4 MAEG | 0,52 | 100 TEA | 76 | pas possible ne broye pas | | | | 0 |
| *60 | 45 AA<br>20 AITC<br>35 PO4 MAEG | 0,52 | 100 NH4 | 76 | 41 | 175 | 500 | 220 | 0* |
| 61 | 45 AA<br>20 AITC<br>35 PO4 MAEG | 0,52 | 50 Ca<br>50 Na | 76 | 43 | 210 | 2350 | 555 | 4 |
| 62 | 45 AA<br>20 AITC<br>35 PO4 MAEG | 0,52 | 50 Mg<br>50 Na | 76 | 44 | 250 | 6600 | 1000 | 4 |
| 63 | 45 AA<br>20 AITC<br>35 PO4 MAEG | 0,52 | 30 Ca<br>70 Na | 76 | 49 | 580 | 20000 | 2350 | 3,5 |
| *64 | 45 AA<br>20 AITC<br>35 PO4 MAEG | 0,52 | SANS | 76 | nul | | | | 0 |

AA=Acide Acrylique
AM=Acide Méthacrylique
AAM=Acrylamide
AEG=Acrylate d'EthylèneGlycol
AITC=Acide Itaconique
ANMA=Anhydride Maleique
APP=AcidePropènePhosphonique
AAPP=Acide AcrylamidoMéthylPropènePhosphonique
PO4MAEG=Phosphate de Méthacrylate d'EthylèneGlycol
PO4AEG=Phosphate d'Acrylate d'EthylèneGlycol
PO4TSP18OE=Phosphate de TriStyrilPhénol18OE
PO4AL=Phosphate d'allyle

Na= ion sodium
Ca= ion calcium
Mg= ion magnésium
K= ion potassium
Li= ion lithium
TEA= triéthanol amine
NH4= ion ammonium

0*=inapplicable dégagement ammoniac
MS= matière sèche
GRANULO= granulométrie
NEUTRAL= neutralisation

NOTATION
0=très mauvais
1= mauvais
2= médiocre
3= moyen
4= bon
5= très bon

* Exemples Comparatifs

Par comparaison avec le tableau 1, il apparaît que l'ion de salification des fonctions acides de l'agent ou l'absence

de salification desdites fonctions peut avoir une influence importante et néfaste sur les caractéristiques des suspensions (essais 58, 59 et 64) et qu'il doit faire l'objet d'une sélection (essais 55, 56, 57, 61, 62 et 63), le cas de l'essai 60, bien que donnant de bons résultats, ne pouvant être retenu pour une exploitation industrielle en raison du fort dégagement d'ammoniac qui se produit lors de la préparation de la sauce de couchage et de son application sur le papier.

Ainsi et selon l'invention, l'ion salifiant doit être choisi dans le groupe des monovalents constitué par le lithium, le sodium et le potassium, ou encore dans le groupe des divalents à condition qu'il soit pour partie associé à l'ion monovalent cité ci-dessus.

Exemple 6

Cet exemple illustre la préparation de sauces de couchage (mélange de deux pigments) comparatives destinées à l'enduction du papier, préparées selon des procédés connus et faisant usage pour les unes d'agents de compatibilité, de dispersion et/ou de broyage appartenant à l'art antérieur (essais 1 et 4) et pour l'autre (essai 48) d'un agent utilisé selon l'invention.

Chaque sauce de couchage contenait en parties en poids :

| | |
|---|---|
| Carbonate de calcium ayant au moins 40% des particules inférieures à 1 micromètre | 85 |
| Blanc satin (Ethringite) | 15 |
| Latex<br>(S 360 D commercialisé par BASF) | 10,5 |
| Carboxyméthylcellulose (Finnfix 5 commercialisé par Metralliiton Tilisuus) | 0,5 |
| Agent selon l'invention ou agent de dispersion de l'art antérieur | 1 |
| Hydroxyde de sodium (à 50 % en poids) | 0,8 |

La concentration en matière sèche était de 63 %.

L'introduction de l'hydroxyde de sodium a été faite sous agitation dans la suspension de carbonate de calcium avant l'ajout des autres composants.

Toutes les caractéristiques de ces sauces de couchage ainsi préparées ont été rassemblées dans le tableau 6 ci-après.

TABLEAU 6

| | CARACTERISTIQUES DE L'AGENT | | | DES SAUCES DE COUCHAGE | |
|---|---|---|---|---|---|
| Slurry broye avec l' agent | % AGENT EN POIDS | ION DE NEUTRALISATION | VISCOSITE SPECIFIQUE | VISCOSITE 10 T | 100 T |
| issu de l' essai N° 4 | 1 | NH4 | 0,55 | 2800 | 580 |
| issu de l' essai N° 48 | 1 | Na | 0,54 | 1000 | 280 |
| issu de l' essai N° 1 | 1 | Na | 0,55 | prise en masse | |

Dès lors, il est manifeste que, la sauce de couchage issue de l'essai 4 contenant l'agent dispersant salifié par l'ammonium restant fluide après l'ajout de l'hydroxyde de sodium, ne peut être retenue pour une application à l'échelle industrielle, car il s'est produit un fort dégagement d'ammoniac au moment de l'introduction de l'hydroxyde de sodium concentré.

La sauce de couchage issue de l'essai 1 contenant l'agent dispersant selon l'art antérieur est devenue inutilisable en raison de sa prise en masse lors de l'introduction de l'hydroxyde de sodium.

Seule, la sauce de couchage issue de l'essai 48 par utilisation selon l'invention de l'agent a été retenue au terme de l'introduction de l'hydroxyde de sodium en raison de l'absence d'effet de choc et d'une viscosité tout à fait acceptable pour l'homme de métier.

## Revendications

1. Utilisation d'un agent de compatibilité, de dispersion et/ou de broyage dans le but d'inhiber l'effet de choc dû à des ajouts d'électrolytes alcalins concentrés dans des suspensions aqueuses de carbonate de calcium de dimension pigmentaire, de concentration en matière sèche d'au moins 70 % en poids, agent appartenant à la famille des copolymères de formule générale:

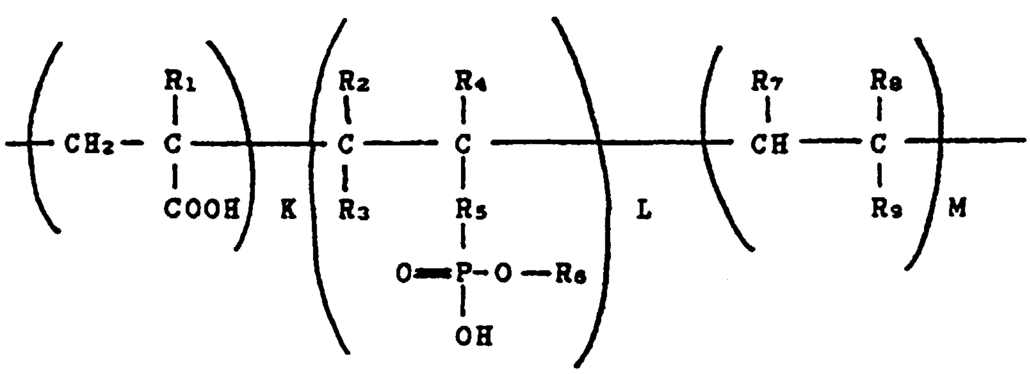

symbolisée par la formule :

$$-(A)_K-(B)_L-(C)_M-$$

dans laquelle le monomère (A) est un monomère éthylénique à fonction monocarboxylique, le monomère (B) est un monomère éthylénique à fonction phosphatée ou phosphonée, le monomère (C) est un monomère éthylénique à fonction dicarboxylique, caractérisée en ce que ledit agent est un copolymère sélectionné dans lequel, bornes incluses :

a) K prend une valeur comprise entre 30 et 65 % en poids par rapport à la masse totale,
b) L prend une valeur comprise entre 20 et 60 % en poids par rapport à la masse totale,
c) M prend une valeur comprise entre 10 et 45 % en poids par rapport à la masse totale,
d) le cumul de L et M est au moins égal à 35 % en poids par rapport à la masse totale
et en ce que :

- $R_1$ est l'hydrogène ou $CH_3$,
- $R_2$ et $R_3$ sont l'hydrogène, une fonction carboxylique ou un alkyle en $C_1$ à $C_4$ et de préférence en $C_1$ à $C_3$,
- $R_4$ est l'hydrogène, un alkyle en $C_1$ à $C_4$,
- ou bien $R_5$, groupement d'atome liant le phosphore à la chaîne polymérique par une fonction phosphate, est un ester carboxylique, un amide substitué ou l'oxygène.
- ou bien $R_5$, groupement d'atome liant le phosphore à la chaîne polymérique par une fonction phosphonate, est un alkyle en $C_1$ à $C_4$, un ester en $C_1$ à $C_{12}$, de préférence en $C_1$ à $C_3$, ou un amide substitué.
- $R_6$ est l'hydrogène, un cation, une amine, un alkyle en $C_1$ à $C_3$, un ester en $C_1$ à $C_4$, ou un amide substitué.
- $R_7$, $R_8$, et $R_9$, sont l'hydrogène, un groupement carboxylique
  en ce qu'il est au moins partiellement neutralisé par un agent de neutralisation choisi dans le groupe des métaux alcalins et assimilés et préférentiellement dans le groupe constitué par le lithium, le sodium, le potassium

et en ce que :
le copolymère a une viscosité spécifique comprise entre 0,35 et 0,85 et préférentiellement entre 0,40 et 0,70.

**2.** Utilisation d'un agent de compatibilité, de dispersion et/ou de broyage selon la revendication 1, caractérisée en ce que ledit agent est un copolymère dans lequel $R_5$ est un ester carboxylique d'oxyde d'éthylène ou de propylène de formule :

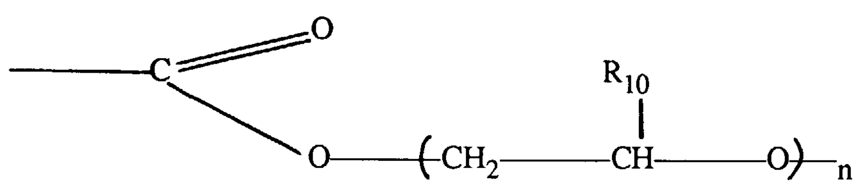

dans laquelle n prend une valeur comprise entre 1 et 50 et de préférence entre 1 et 10.

**3.** Utilisation d'un agent de compatibilité, de dispersion et/ou de broyage selon la revendication 1, caractérisée en ce que ledit agent est un copolymère dans lequel $R_5$ est un ester carboxylique d'alkyle, d'aryle ou d'alkaryle de formule :

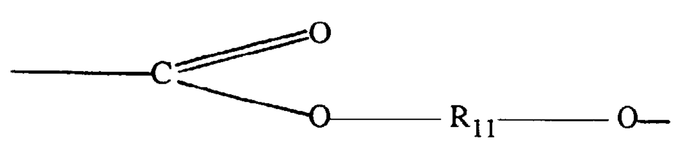

dans laquelle $R_{11}$ peut comporter de 1 à 12 atomes de carbones.

**4.** Utilisation d'un agent de compatibilité, de dispersion et/ou de broyage selon la revendication 1, caractérisée en ce que ledit agent est un copolymère dans lequel $R_5$ est un amide substitué de formule :

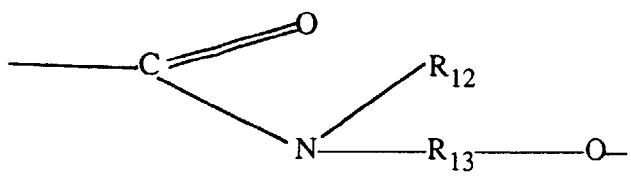

dans laquelle $R_{12}$ est l'hydrogène, un alkyle en $C_1$ à $C_4$, et $R_{13}$ est un alkyle en $C_1$ à $C_4$

**5.** Utilisation d'un agent de compatibilité, de dispersion et/ou de broyage selon l'une quelconque des revendications 1 à 4 caractérisée en ce que l'agent de neutralisation monovalent est associé à un agent de neutralisation polyvalent.

**6.** Utilisation d'un agent de compatibilité, de dispersion et/ou de broyage selon la revendication 5, caractérisée en ce que l'agent de neutralisation polyvalent est choisi dans le groupe constitué par les alcalino-terreux ou assimilés, préférentiellement par le calcium, le magnésium.

**7.** Suspension aqueuse pigmentaire contenant du carbonate de calcium et l'agent utilisé selon l'une quelconque des revendications 1 à 6 caractérisée en ce qu'elle ne contient pas de sulfate de calcium hydraté et en ce qu'elle est réalisée selon les étapes suivantes :

a) on réalise sous agitation la préparation par délitage d'une suspension aqueuse de carbonate de calcium en introduisant d'abord tout ou partie de l'agent selon l'invention dans la phase aqueuse, puis le matériau minéral de manière à obtenir une suspension fluide et souhaitablement homogène,

b) on introduit en continu la suspension préparée selon (a) dans une zone de broyage constituée par un broyeur à micro-éléments,

c) on maintient la température de la suspension au cours du broyage à un niveau inférieur à 100°C et préférentiellement comprise entre la température ambiante et 80°C,

d) on malaxe la suspension à broyer en présence des micro-éléments pendant le temps nécessaire à l'obtention de la granulométrie recherchée.

e) éventuellement, on introduit au cours du broyage en au moins une fois une fraction complémentaire de l'agent,

f) à la sortie du broyeur, on sépare en continu la suspension de carbonate de calcium finement broyée d'avec les corps broyants et les particules refusées parce que trop grossières,

g) on introduit dans la suspension finement broyée l'électrolyte alcalin sous forme concentrée avant ou après l'avoir éventuellement formulée pour l'application papetière par ajouts des divers agents habituellement mis en oeuvre.

**8.** Suspension aqueuse pigmentaire selon la revendication 7, caractérisée en ce que l'agent est introduit à raison de 0,05 à 4 % en poids de matières actives par rapport au poids sec des matériaux minéraux, et préférentiellement à raison de 0,5 à 2,0 %.

**9.** Suspension aqueuse pigmentaire selon les revendications 7 ou 8, caractérisée en ce qu'elle a une concentration en matière sèche comprise entre 74 % et 80 % en poids.

**10.** Utilisation des suspensions aqueuses pigmentaires selon l'une quelconque des revendications 7 à 9 contenant du carbonate de calcium affiné comme charge pigmentaire dans le couchage du papier.

## Patentansprüche

**1.** Verwendung eines Kompatibilisierungs-, Dispersions- und/oder Mahlmittels zur Hemmung der Schockwirkung aufgrund der Zugabe konzentrierter alkalischer Elektrolyte zu wäßrigen Calciumcarbonat-Pigmentsuspensionen mit einer Konzentration der Trockensubstanz von mindestens 70 Gew.-%, wobei das Mittel aus der Familie von Copolymeren stammt mit der allgemeinen Formel:

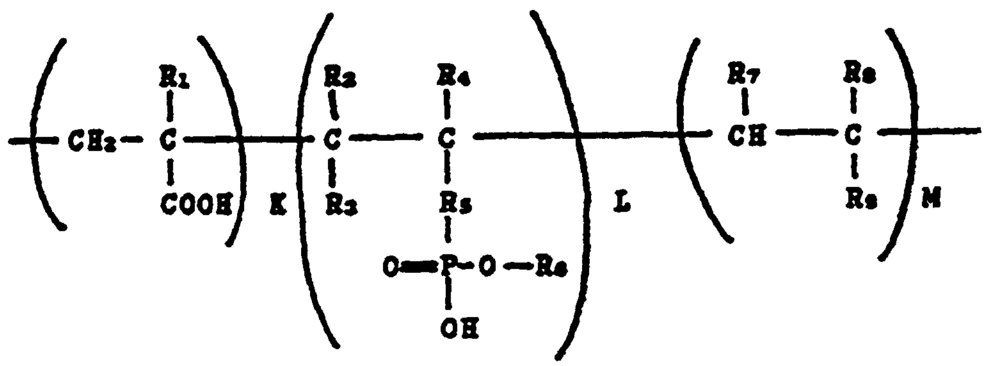

dargestellt durch die Formel:

$$-(A)_K-(B)_L-(C)_M-$$

worin das Monomer (A) ein ethylenisches Monomer mit einer Monocarbonsäurefunktion ist, das Monomer (B) ein ethylenisches Monomer mit einer Phosphat- oder Phosphonat-Funktion ist, das Monomer (C) ein ethylenisches Monomer mit einer Dicarbonsäurefunktion ist, dadurch gekennzeichnet, daß das Mittel aus einem Copolymer ausgewählt wird, bei dem, einschließlich der Grenzen:

a) K einen Wert zwischen 30 und 65 Gew.-%, bezogen auf das Gesamtgewicht, hat,
b) L einen Wert zwischen 20 und 60 Gew.-%, bezogen auf das Gesamtgewicht, hat,
c) M einen Wert zwischen 10 und 45 Gew.-%, bezogen auf das Gesamtgewicht, hat,
d) die Summe aus L und M mindestens gleich 35 Gew.-%, bezogen auf das Gesamtgewicht, ist,

und dadurch, daß:

- $R_1$ Wasserstoff oder $CH_3$ ist,
- $R_2$ und $R_3$ Wasserstoff, eine Carbonsäurefunktion oder ein $C_1$- bis $C_4$-Alkyl und vorzugsweise $C_1$- bis $C_3$-Alkyl sind,
- $R_4$ Wasserstoff, ein $C_1$- bis $C_4$-Alkyl ist,
- $R_5$ entweder eine Atomgruppe, die Phosphor mit der Polymerkette über eine Phosphatfunktion verbindet, ein Carbonsäureester, ein substituiertes Amid oder Sauerstoff ist,
- oder $R_5$, eine Atomgruppe, die Phosphor mit der Polymerkette über eine Phosphonatfunktion verbindet, ein $C_1$- bis C,-Alkyl, ein $C_1$- bis $C_{12}$-Ester, vorzugsweise $C_1$- bis $C_3$-Ester, oder ein substituiertes Amid ist,
- $R_6$ Wasserstoff, ein Kation, ein Amin, ein $C_1$- bis $C_3$-Alkyl, ein $C_1$- bis $C_4$-Ester oder ein substituiertes Amid ist,
- $R_7$, $R_8$ und $R_9$ Wasserstoff, eine Carbonsäuregruppe sind, dadurch, daß es zumindest teilweise mit einem Neutralisationsmittel neutralisiert ist, ausgewählt aus der Gruppe mit Alkalimetallen und Gleichgestellten und vorzugsweise aus der Gruppe, bestehend aus Lithium, Natrium, Kalium, und dadurch, daß:
  das Copolymer eine spezifische Viskosität zwischen 0,35 und 0,85 und vorzugsweise zwischen 0,40 und 0,70 hat.

**2.** Verwendung eines Kompatibilisierungs-, Dispersions- und/oder Mahlmittels nach Anspruch 1, dadurch gekennzeichnet, daß das Mittel ein Copolymer ist, in dem $R_5$ ein Carbonsäureester von Ethylenoxid oder Propylenoxid ist mit der Formel:

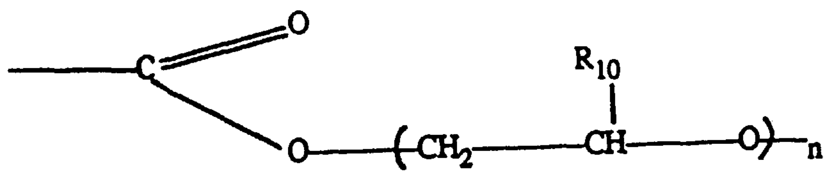

wobei n einen Wert zwischen 1 und 50 und vorzugsweise 1 und 10 hat.

**3.** Verwendung eines Kompatibilisierungs-, Dispersions- und/oder Mahlmittels nach Anspruch 1, dadurch gekennzeichnet, daß das Mittel ein Copolymer ist, in dem $R_5$ ein Carbonsäureester von Alkyl, Aryl oder Aralkyl ist mit der Formel:

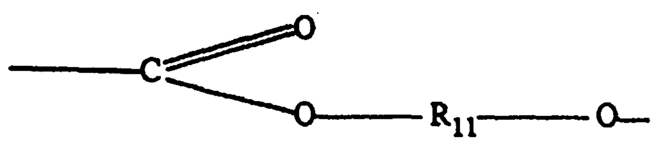

wobei $R_{11}$ 1 bis 12 Kohlenstoffatome enthalten kann.

**4.** Verwendung eines Kompatibilisierungs-, Dispersions- und/oder Mahlmittels nach Anspruch 1, dadurch gekennzeichnet, daß das Mittel ein Copolymer ist, in dem $R_5$ ein substituiertes Amid ist mit der Formel:

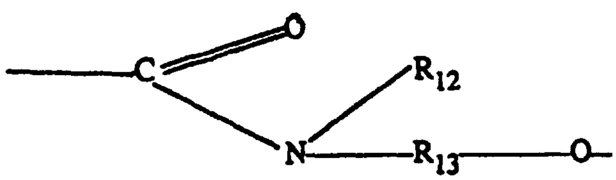

wobei $R_{12}$ Wasserstoff, ein $C_1$- bis $C_4$-Alkyl ist und $R_{13}$ ein $C_1$- bis $C_4$-Alkyl ist.

**5.** Verwendung eines Kompatibilisierungs-, Dispersions- und/oder Mahlmittels nach einem der Ansprüche 1 bis 4, dadurch gekennzeichnet, daß das einwertige Neutralisationsmittel mit einem mehrwertigen Neutralisationsmittel assoziiert ist.

**6.** Verwendung eines Kompatibilisierungs-, Dispersions- und/oder Mahlmittels nach Anspruch 5, dadurch gekennzeichnet, daß das mehrwertige Neutralisationsmittel ausgewählt ist aus der Gruppe mit Erdalkalimetallen oder Gleichgestellten, vorzugsweise aus Calcium, Magnesium.

**7.** Wäßrige Pigmentsuspension, die Calciumcarbonat und das nach einem der Ansprüche 1 bis 6 verwendete Mittel enthält, dadurch gekennzeichnet, daß sie kein hydratisiertes Calciumsulfat enthält und nach den folgenden Schritten hergestellt wird:

a) Herstellen einer wäßrigen Calciumcarbonatsuspension durch Aufschlämmen unter Rühren, indem zunächst das erfindungsgemäße Mittel insgesamt oder teilweise und dann die Mineralsubstanz zur wäßrigen Phase gegeben wird, um eine flüssige und möglichst homogene Suspension zu erhalten,
b) fortlaufendes Zuführen einer gemäß (a) hergestellten Suspension zu einer aus einer Mikroelementmühle bestehenden Feinzerkleinerungszone,
c) Halten der Temperatur der Suspension während des Mahlens bei unter 100°C und vorzugsweise zwischen Umgebungstemperatur und 80°C,
d) Kneten der zu mahlenden Suspension in Gegenwart von Mikroelementen für einen Zeitraum, der ausreicht, um die bestimmte Kornklassierung zu erhalten.

e) Gegebenenfalls Zugabe einer zusätzlichen Portion des Mittels mindestens einmal während des Mahlens,
f) fortlaufendes Trennen der feingemahlenen Calciumcarbonatsuspension vom Mahlkörper und von als zu grob abgelehnten Partikeln nach dem Mahlen,
g) Zugabe eines alkalischen Elektrolyten in konzentrierter Form zur feingemahlenen Suspension bevor oder nachdem sie gegebenenfalls für die Papieranwendung durch Zugabe verschiedener gewöhnlich verwendeter Mittel formuliert worden ist.

**8.** Wäßrige Pigmentsuspension nach Anspruch 7, dadurch gekennzeichnet, daß das Mittel zu 0,05 bis 4 Gew.-% des Wirkstoffes, bezogen auf das Trockengewicht der mineralischen Substanzen, und vorzugsweise zu 0,5 bis 2% zugegeben wird.

**9.** Wäßrige Pigmentsuspension nach den Ansprüchen 7 oder 8, dadurch gekennzeichnet, daß sie eine Konzentration der Trockensubstanz zwischen 74 Gew.-% und 80 Gew.-% aufweist.

**10.** Verwendung der wäßrigen Pigmentsuspensionen nach einem der Ansprüche 7 bis 9, die verfeinertes Calciumcarbonat enthalten, als Pigmentzusatz bei der Papierbeschichtung.

## Claims

**1.** Use of a compatibility, dispersing and/or grinding agent in order to inhibit the shock effect caused by adding concentrated alkaline electrolytes to aqueous calcium carbonate pigment suspensions, having a dry matter concentration of at least 70% by weight, which agent belongs to the family of copolymers of general formula:

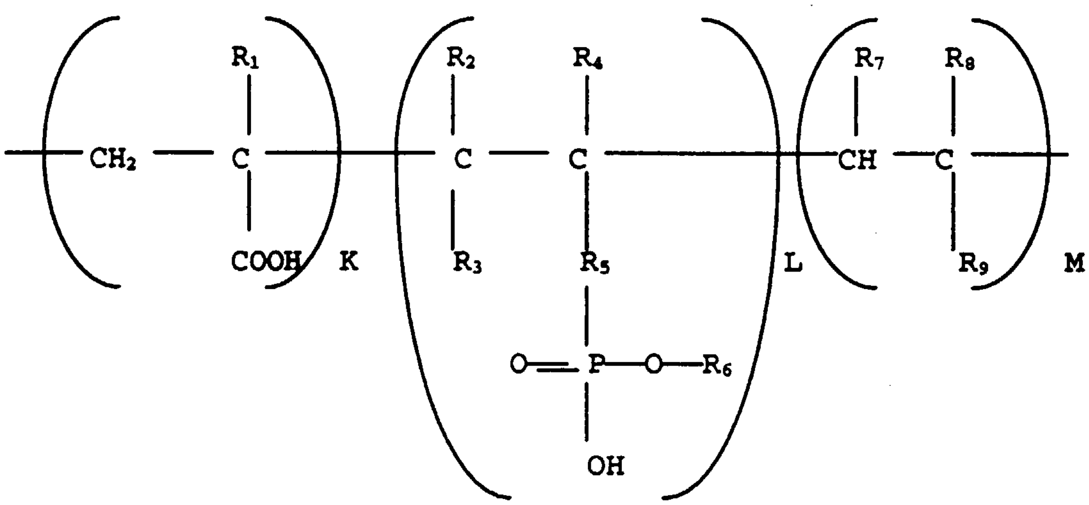

represented by the formula:

$$-(A)_K-(B)_L-(C)_M-$$

in which monomer (A) is an ethylene monomer with a monocarboxylic group, monomer (B) is an ethylene monomer with a phosphate or phosphonic group and monomer (C) is an ethylene monomer with a dicarboxylic group, characterised by the fact that the said agent is a selected copolymer in which, inclusively:

a) K has a value of between 30 and 65% by weight relative to the total mass,
b) L has a value of between 20 and 60% by weight relative to the total mass,

c) M has a value of between 10 and 45% by weight relative to the total mass,
d) the sum of L and M is greater than or equal to 35% by weight relative to the total mass and by the fact that:

- $R_1$ is hydrogen or $CH_3$,
- $R_2$ and $R_3$ are hydrogen, a carboxylic group, or a $C_1$ to $C_4$ and preferably $C_1$ to $C_3$ alkyl,
- $R_4$ is hydrogen, or a $C_1$ to $C_4$ alkyl,
- either $R_5$, an atomic group bonding phosphorus to the polymer chain through a phosphate group, is a carboxylic ester, a substituted amide, or oxygen.
- or $R_5$, an atomic group bonding phosphorus to the polymer chain through a phosphonate group, is a $C_1$ to $C_4$ alkyl, a $C_1$ to $C_{12}$ and preferably a $C_1$ to $C_3$ ester, or a substituted amide.
- $R_6$ is hydrogen, a cation, an amine, a $C_1$ to $C_3$ alkyl, a $C_1$ to $C_4$ ester, or a substituted amide.
- $R_7$, $R_8$ and $R_9$ are hydrogen, or a carboxylic group

by the fact that it is at least partially neutralised by a neutralising agent selected from the group of alkaline metals and the like and preferably from the group consisting of lithium, sodium and potassium

and by the fact that:
the copolymer has a specific viscosity of between 0.35 and 0.85 and preferably between 0.40 and 0.70.

2. Use of a compatibility, dispersing and/or grinding agent as described in claim 1, characterised by the fact that the said agent is a copolymer in which $R_5$ is a carboxylic ester of ethylene or propylene oxide of formula:

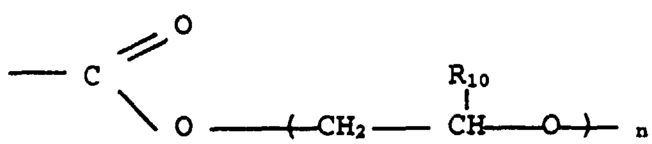

in which n has a value of between 1 and 50 and preferably between 1 and 10.

3. Use of a compatibility, dispersing and/or grinding agent as described in claim 1, characterised by the fact that the said agent is a copolymer in which $R_5$ is an alkyl, aryl, or alkaryl carboxylic ester of formula:

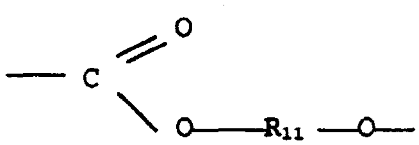

in which $R_{11}$ can have 1 to 12 carbon atoms.

4. Use of a compatibility, dispersing and/or grinding agent as described in claim 1, characterised by the fact that the said agent is a copolymer in which $R_5$ is a substituted amide of formula:

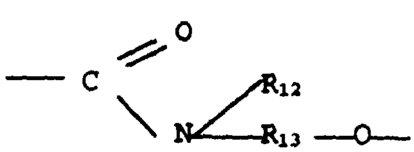

in which $R_{12}$ is hydrogen, a $C_1$ to $C_4$ alkyl, and $R_{13}$ is a $C_1$ to $C_4$ alkyl.

5. Use of a compatibility, dispersing and/or grinding agent as described in any one of claims 1 to 4,

characterised by the fact that the monovalent neutralising agent is associated with a polyvalent neutralising agent.

**6.** Use of a compatibility, dispersing and/or grinding agent as described in claim 5, characterised by the fact that the polyvalent neutralising agent is selected from the group consisting of the alkaline-earths or the like, and preferably of calcium and magnesium.

**7.** Aqueous pigment suspension containing calcium carbonate and the agent used in accordance with any one of claims 1 to 6, characterised by the fact that it does not contain hydrated calcium sulphate and by the fact that it is made in accordance with the following steps:

a) an aqueous suspension of calcium carbonate is prepared by introducing with agitation, all or part of the agent in accordance with the invention into the aqueous phase, and then the mineral material so as to obtain a fluid and desirably homogeneous suspension,

b) the suspension prepared in accordance with (a) is introduced continuously into the grinding zone consisting of a micro-element mill,

c) during grinding the temperature of the suspension is maintained at a level lower than 100°C and preferably between ambient temperature and 80°C,

d) the suspension to be ground is mixed in the presence of the micro-elements for the time necessary to obtain the required granular size.

e) optionally, an additional fraction of the agent is introduced at least once during grinding,

f) at the outlet of the mill, the finely ground suspension of calcium carbonate is separated continuously from the grinding bodies and the particle rejected for being to large,

g) the alkaline electrolyte in concentrated form is introduced into the finely ground suspension before or after it has optionally been formulated for application to paper-making by addition of the various agents usually employed.

**8.** Aqueous pigment suspension as described in claim 7, characterised by the fact that the agent is introduced in the ratio of 0.05 to 4% by weight of active materials relative to the dry weight of the mineral materials, and preferably in the ratio of 0.5 to 2.0%.

**9.** Aqueous pigment suspension as described in claim 7 or 8, characterised by the fact that it has a dry matter concentration of between 74% and 80% by weight.

**10.** Use of the aqueous pigment suspensions as described in any on of claims 7 to 9 containing fine calcium carbonate as a pigment filler in paper coating.